# EUROPÄISCHE PATENTSCHRIFT

(11) **EP 1 374 967 B1**
(45) Veröffentlichungstag und Bekanntmachung des Hinweises auf die Patenterteilung: **30.05.2012**
(21) Anmeldenummer: 03012592.6
(22) Anmeldetag: 03.06.2003
(51) Int. Cl.: B01D 71/02, B01D 63/16

(54) **Plattenförmiger Filtrationskörper**
Discoid filtration body
Corps de filtration en plaque

(30) Priorität: 26.06.2002 DE 10228432
(43) Veröffentlichungstag der Anmeldung: 02.01.2004
(73) Patentinhaber: Westfalia Separator AG, 59302 Oelde (DE)
(72) Erfinder: Feuerpeil, Hans, 73529 Schwäbisch Gmünd (DE); Bläse, Dieter, 73557 Mutlangen (DE); Olapinski, Hans, Dr., 73773 Aichwald (DE); Bellido, Eduardo, 73432 Aalen (DE)
(74) Vertreter: Weitzel, Wolfgang

(56) Entgegenhaltungen:
- WO-A-02/005935
- DE-C- 10 023 292
- US-A- 4 727 922

## Beschreibung

Die Erfindung betrifft ein Verfahren zum Herstellen eines plattenförmigen Filtrationskörpers - im folgenden "Filtrationsplatte" genannt.

Das Dokument US 4 727 922 A1 beschreibt ein Druckgießverfahren sowie die dazugehörige Vorrichtung zum Druckgießen hochschmelzender Metalle, Dabei ist eine Zwangsentlüftung vorgesehen, mittels der die in der Form befindlichen Gase abgesaugt werden. Zusätzlich wird über einen beweglichen Kern ein Nachdrücken der flüssigen Schmelze erreicht.

Das Dokument WO 0/05935 A2 beschreibt eine derartige Filtrationsplatte.

Auf DE 100 19 672 und DE 100 23 292 wird verwiesen. Dort sind solche Flltrationsplatten beschrieben und dargestellt.

Solche Filtrationsplatten können beispielsweise die Gestalt einer Kreisscheibe haben. Sie bestehen beispielsweise aus einem Filtermembranmaterial, beispielsweise aus porösem Siliziumdioxid. Eine Vorrichtung zur Filtration von fließfähigen Medien kann eine Mehrzahl solcher Filtrationsplatten umfassen. Die Filtrationsplatten sind dabei koaxial zueinander angeordnet und weisen einen gegenseitigen Abstand auf. Eine Hohlwelle ist durch sämtliche Filtrationsplatten hindurchgeführt. Die einzelne Filtrationsplatte weist in ihrem Inneren Permeat-Ableitkanäle auf, die mit dem Innenraum der Hohlwelle in leitender Verbindung stehen.

Die Filtrationsplatten werden dabei wie folgt erzeugt:

In ein Formnest wird zunächst eine erste Menge eines sinterfähigen Pulvers geschüttet. Auf diese Lage wird ein Zwischenkörper aufgebracht, der aus einem unter Druck oder unter Wärme sich verflüchtigenden Material besteht,
beispielsweise aus Karton. Auf diesen Zwischenkörper wird eine weitere Lage sinterfähigen Pulvers geschüttet. Das Ganze wird im Formnest verdichtet. Das Material des Zwischenkörpers verflüchtigt sich, und es verbleibt ein Hohlraum, der die genannten Permeat-Ableitkanäle bildet.

An Filtrationsplatten der genannten Art werden besondere Anforderungen gestellt. Diese betreffen insbesondere die Festigkeit der einzelnen Platte. So soll die Filtrationsplatte während des Betriebes den erheblichen Beanspruchungen zufolge von Strömungen in einer Filtrationsanlage standhalten. Die einzelne Platte soll aber auch in sich genügend fest sein, so dass beispielsweise bei Aufbau aus mehreren Lagen der Verbund zwischen solchen Lagen dauerhaft ist. Die Platten sollen sich leicht zusammenfügen lassen zu Plattenpaketen der genannten Bauart. Sie sollen leicht herstellbar und kostengünstig sein. Sie sollen sich leicht handhaben lassen, was die Montage und Demontage anbetrifft.

Die genannte Forderung der dauerhaften Bindung der Lagen aneinander ist ganz wichtig. Mit anderen Worten bedeutet dies, dass die Platten spaltfest sein müssen und sich somit nicht trennen dürfen. Trennen sie sich, so ist die Platte nicht mehr funktionsfähig. Sie ist bereits dann nicht mehr funktionsfähig, wenn sich Risse in der Platte zeigen. Die Risse treten in der Platte gerade in der Ebene auf, in welcher sich der Zwischenkörper während der Verdichtung des Pulvers befindet, und somit zwischen den Permeat-Ableitkanälen in der fertigen Platte. Die Ursachen sind bisher unbekannt.

Der Erfindung liegt die Aufgabe zugrunde, Filtrationsplatten derart zu gestalten, dass sie den genannten Anforderungen in höherem Maße genügen, als die bisher bekannten Filtrationsplatten. Insbesondere sollen solche Platten spaltfest sein, das heißt keinerlei Risse aufweisen, vor allem nicht im Bereich der Permeat-Ableitkanäle.

Diese Aufgabe wird durch die unabhängigen Ansprüche gelöst.

Ein erfindungsgemäßes Verfahren zum Herstellen eines plattenförmigen Filtrationskörpers (Filtrationsplatte) aus einem sinterfähigen Pulver, wobei der plattenförmige Filtrationskörper einen Stützkörper umfasst, der aus porösem Material besteht, und in den Parmeat-Ableükanälen eingebettet ist, sowie wenigstens eine filtrierende Schicht, die auf den Außenseiten des Stützkörpers aufgebracht ist, umfasst die folgenden Verfahrensschritte: Es wird ein erstes Quantum sinterfähigen Pulvers in ein Formnest eingebracht, dessen Innenkontur annäherend der Außenkontur des Stützkörpers entspricht. Sodann wird auf das erste Quantum ein Zwischenkörper aufgebracht, der aus einem unter Druck und/oder Wärme sich verflüchtigenden Material besteht. Hiernach wird ein zweites Quantum sinterfähigen Pulvers auf den Zwischenkörper aufgeschüttet. Anschließend werden die beiden Quanten mit dem dazwischen befindlichen Zwischenkörper durch Verdichten zu einem Zwischenprodukt geformt, wobei das Zwischenprodukt gesintert, gegebenenfalls durch mechanische Bearbeitung in die endgültige Form gebracht und mit einer filtrierenden Schicht überzogen wird. Erfindungsgemäß wird vor dem Verdichten und/oder während des Verdichtens an das Formnest ein Unterdruck angelegt, oder es wird das Verdichten intermittierend durchgeführt.

Der Erfindung liegt Folgendes zugrunde:
Dass das sinterfähige Pulver vor und beim Verdichten Luft enthält, ist bekannt. Die Luft befindet sich zwischen den Partikeln des Pulvers.

Was nicht bekannt ist und was die Erfinder erkannt haben, ist aber die Tatsache, dass diese Luft die Ursache für die mangelnde Spaltfestigkeit ist. Die Luft wird nämlich beim Verdichtungsvorgang ebenfalls verdichtet und kann über längere Zeit über die Formführungen der Pressform entweichen. Reicht die Zeit nicht aus, um während der Verdichtungsphase aus dem Pressling zu entweichen, so kann die im Pressling eingeschlossene Luft unter einem höheren Druck stehen, als der umgebende Luftdruck. Nach Entlastung kann die eingeschlossene, unter Überdruck stehende Luft entweder langsam durch die Porosität des Presslings nach außen entweichen oder schnell unter Zerstörung des Presslings. Besonders gefährdet sind dabei größere Hohlräume oder Diskontinuitäten im Pressling.

Die Risse sind von außen nicht erkennbar. Man erkennt sie aber am Klang der Platte. Schlägt man auf eine rissbehaftete Platte, so hat diese nur einen sehr kurzzeitigen und nicht harmonischen Nachhall. Schlägt man eine einwandfreie Platte an, so hat diese einen schönen, harmonischen und langen Nachhall (geringe Dämpfung).

Die Erfindung ist anhand der Zeichnung näher erläutert. Darin ist im Einzelnen folgendes dargestellt:
- Figur 1: zeigt eine Vorrichtung mit Filterplatten gemäß der Erfindung in einer schematischen Aufrissansicht.
- Figur 2: zeigt den Gegenstand von Figur 1 in einer Draufsicht.
- Figur 3: zeigt eine abgewandelte Ausführungsform des Gegenstandes von Figur 1, wiederum in Draufsicht.
- Figur 4: zeigt ein Segment als Bestandteil einer Filtrationsplatte in Draufsicht.
- Figur 5: zeigt eine Schnittansicht gemäß der Schnittlinie V - V von Figur 4 in einer Abwicklung.

Die Figuren 6 und 7 zeigen zwei weitere Ausführungsformen von Segmenten in Draufsicht.
- Figur 8: veranschaulicht in einem Axialschnitt eine Filtrationsplatte mit einer bestimmten Kanalkonfiguration.
- Figur 9: zeigt eine Filtrationsplatte in Seitenansicht.
- Figur 10: zeigt in einem zur Plattenebene senkrechten Schnitt - das heißt parallel zur Drehachse der Hohlwellen 1, 2, den Aufbau einer erfindungsgemäßen Filtrationsplatte.
- Figur 11: zeigt schematisch einen Teil einer Vorrichtung zum Durchführen des Verfahrens und veranschaulicht dessen einzelne Phasen.
- Figur 12: zeigt schematisch eine erfindungsgemäße Vorrichtung mit zwei Kolben vor Beginn des Verdichtungsprozesses.
- Figur 13: zeigt den Gegenstand von Figur 12 am Ende des Verdichtungsprozesses.
- Figur 14: zeigt in vergrößerter Darstellung und schematisch den unteren Bereich der Vorrichtung gemäß der Figuren 12 und 13.
- Figur 15: zeigt eine alternative Ausführungsform zu Figur 14.

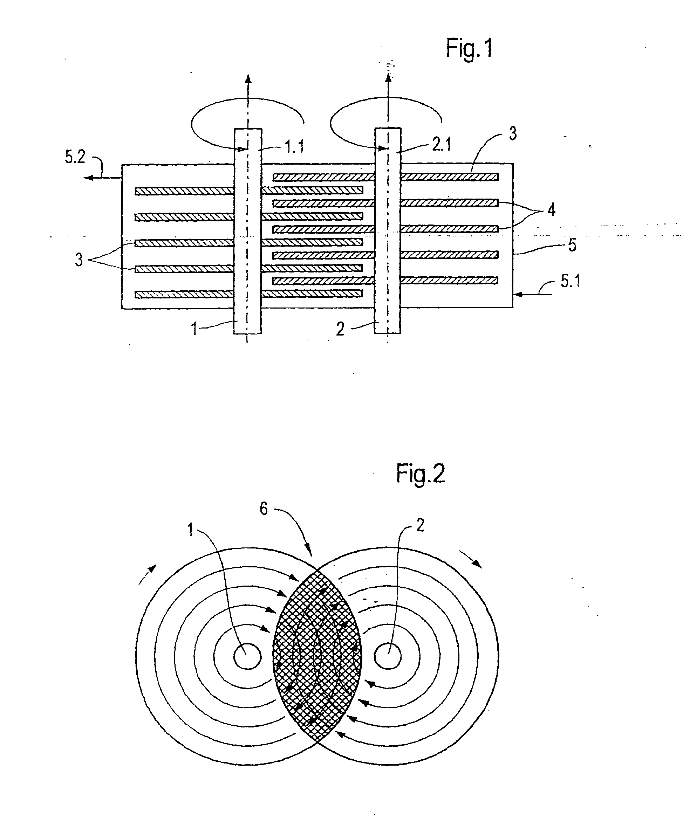

Wie man aus Figur 1 erkennt, weist die Vorrichtung zwei Hohlwellen 1, 2 auf. Den beiden Hohlwellen ist jeweils ein Plattenpaket 3 beziehungsweise 4 zugeordnet. Die Filtrationsplatten sind parallel zueinander angeordnet. Die Filtrationsplatten 3 sind mit der Hohlwelle 1 drehfest verbunden, und die Filtrationsplatten 4 mit der Hohlwelle 2.

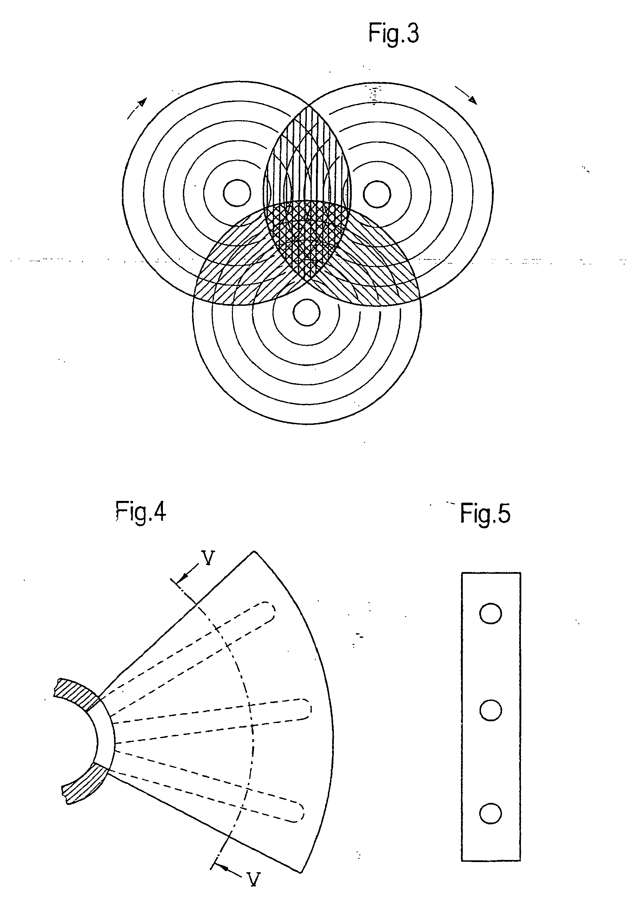

Die Filtrationsplatten 3, 4 bestehen aus porösem keramischen Material mit einer Keramikmembran, die die äußere Filtrationsplattenfläche bildet. Wie aus den Figuren 4 und 5 erkennbar, sind sie mit Kanälen versehen. Da sich die Figuren 4 und 5 auf ein Segment der Filtrationsplatten 3 beziehen, erkennt man dort die Kanäle 3.1. Die Kanäle sind radial angeordnet. Sie verlaufen somit vom Umfangsbereich des Segmentes zur Hohlwelle 3 und stehen mit deren Innenraum in leitender Verbindung. Gewisse Abweichungen von der radialen Richtung sind möglich.

Statt der dargestellten Ausführungsform ist auch die folgende Variante denkbar: Es sind zwei oder mehrere Pakete vorgesehen. Mindestens eines hiervon weist eine Hohlwelle auf und trägt aktive Filtrationsplatten. Es kann auch eine Anzahl von Paketen mit Dummyplatten bestückt sein, mit oder ohne Hohlwelle.

Die betreffende Hohlwelle sowie die zugeordneten Filtrationsplatten werden hier als "Paket" bezeichnet. Dabei ist das aus Hohlwelle 1 und Filtrationsplatte 3 gebildete Paket genau gleich gestaltet und gleichartig aufgebaut, wie das aus Hohlwelle 2 und den Filtrationsplatten 4 aufgebaute Paket. Es wären jedoch auch Abweichungen hiervon möglich. So könnten beispielsweise die Filtrationsplatten des einen Paketes einen größeren Durchmesser als die Filtrationsplatten des anderen Paketes haben. Im vorliegenden Falle sind die Filtrationsplatten kreisförmig. Auch hier wären Abweichungen möglich. Beispielsweise käme eine ovale Form in Betracht.

Die beiden Pakete sind in einem Behälter 5 angeordnet. Der Behälter 5 weist einen Einlass 5.1 sowie einen Auslass 5.2 auf. Die beiden Hohlwellen 1, 2 weisen an ihren oberen Enden Auslässe 1.1 beziehungsweise 1.2 auf.

Die Vorrichtung arbeitet wie folgt:
Dem Behälter wird durch Einlass 5.1 das zu behandelnde Medium zugeführt. Das Filtrat/Permeat gelangt durch die Poren des keramischen Materiales der Keramikscheiben in die Kanäle 3.1 beziehungsweise 4.1- die letztgenannten hier nicht dargestellt. Das Permeat gelangt von den Kanälen in den Innenraum der beiden Hohlwellen 1, 2 und wird an den Auslässen 1.1, 1.2 abgeführt.

Was nicht durch die Poren des Keramikmaterials hindurchzudringen vermag, gelangt als Retentat zum Auslass 5.2 des Behälters 5.

Aus der Darstellung gemäß Figur 2 erkennt man, dass die Filtrationsplatten 3 des einen Paketes mit den Filtrationsplatten 4 des anderen Paketes überlappen. Im Überlappungsbereich 6 entsteht eine Turbulenz im Medium. Diese hat eine Reinigungswirkung an der Oberfläche der Filtrationsplatten zur Folge. Die spezifische Permeationsleistung wird groß, und der spezifische Energiebedarf wird klein.

Bei der in Figur 3 gezeigten Ausführungsform sind drei Pakete vorgesehen. Diese sind wiederum in einem Behälter angeordnet - hier nicht dargestellt -

Eine weitere Möglichkeit besteht darin, eine noch größere Anzahl von Paketen innerhalb ein- und derselben Vorrichtung vorzusehen. So kann beispielsweise ein Paket zentral angeordnet werden, während die übrigen Pakete konzentrisch um das zentrale Paket herumgruppiert werden.

Aus den Figuren 4 und 5 erkennt man, dass die einzelne Filtrationsplatte 3, 4 aus einer Mehrzahl von Segmenten aufgebaut sein kann. Das hier dargestellte Kreissegment ist somit Bestandteil einer Filtrationsplatte 3. Die Filtrationsplatten können jedoch auch ganz und gar aus einem einzigen Teil aufgebaut sein.

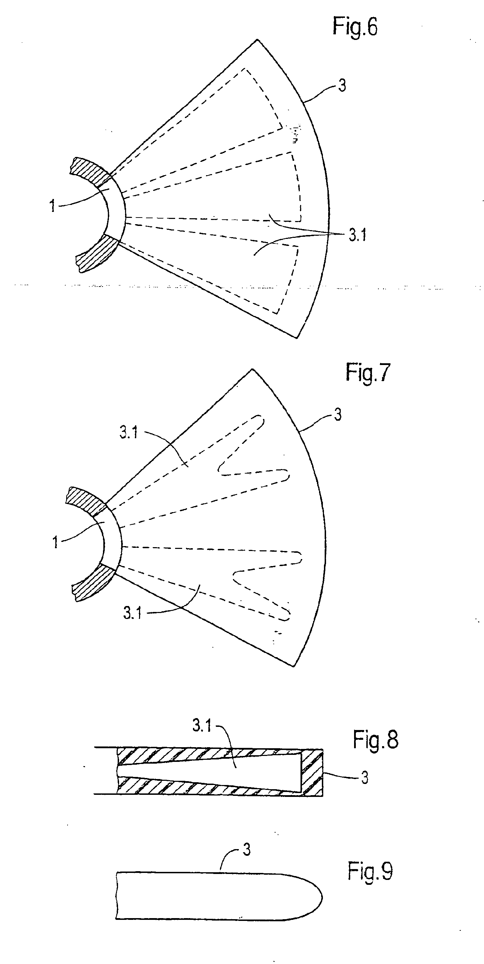

Die in den Figuren 5 und 6 dargestellten Filtrationsplatten 3 weisen Permeat-Kanäle 3.1 bestimmter Konfigurationen auf. Wie man sieht, verjüngen sich die Kanäle in dieser Draufsicht gesehen von außen nach innen. Sie sind somit keilförmig. Im allgemeinen werden sich die Permeat-Kanäle parallel oder annähernd parallel oder annähernd parallel zu den Seitenflächen der Filtrationsplatte 3, 4 erstrecken. Im allgemeinen reichen sie bis zum Zentrum der betreffenden Filtrationsplatte, die dort eine Bohrung hat, und enden im Umfangsbereich vor dem äußeren Rand der Filtrationsplatte 3, 4.

Bei der Ausführungsform gemäß Figur 7 sind die Kanäle 3.1 wiederum keilförmig, haben jedoch im radial äußeren Bereich jeweils eine Einbuchtung. Der Kanal hat somit in dieser Draufsicht eine Art Astgabelform.

Der Sinn dieser Kanalgestaltung besteht darin, dass das Permeat hierdurch kurze Wege zum Permeat-Ableitkanal zurückzulegen hat.

Ein anderer Effekt wird erzielt durch die in Figur 8 gezeigte Kanalgestaltung - diesmal in einem Axialschnitt durch das Plattenpaket gesehen. Wie man sieht, verjüngt sich der Kanal hier wiederum von außen nach innen. Der Sinn besteht in Folgendem: Bei einer rotierenden Filtrationsplatte steht das Permeat im Außenbereich der Filtrationsplatte unter leicht erhöhtem Druck. Die geschilderte Gestaltung des Kanales kompensiert diesen erhöhten Druck durch die Wandstärkenabnahme. Die Kanäle können schließlich derart gestaltet sein, dass die Fließgeschwindigkeit des Filtrats/Permeats auf dessen Weg zur Hohlwelle hin konstant ist.

Aus Figur 9 erkennt man, dass die Filtrationsplatte 3 in ihrem Umfangsbereich stromlinienförmig gestaltet ist, etwa nach Art der angeströmten Kante eines Tragflügels. Es hat sich gezeigt, dass der Verschleiß der Membran hierdurch erheblich minimiert ist.

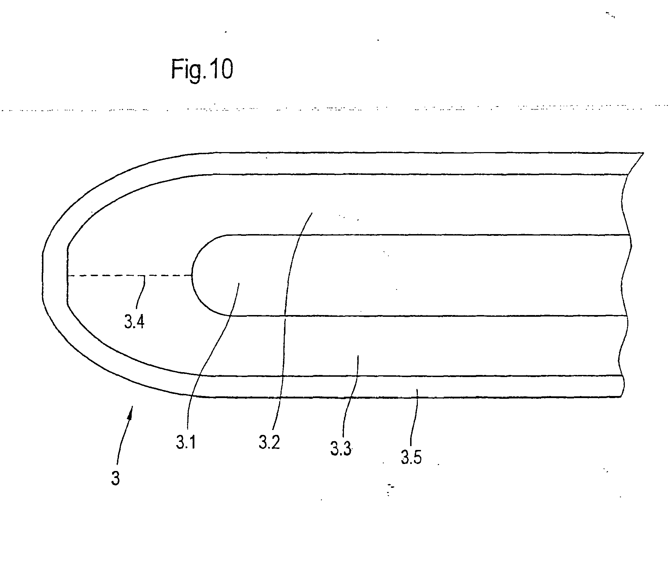

Die in Figur 10 dargestellte Filtrationsplatte 3 ist wie folgt aufgebaut: sie umfasst zwei Stützkörperhälften 3.2, 3.3. Diese sind entlang einer Ebene 3.4 zusammengefügt.

Zwischen den beiden Stützkörperhälften 3.2, 3.3 befinden sich die bereits genannten Permeat-Kanäle 3.1, die das Permeat zu dem Innenraum der betreffenden Hohlwelle leiten.

Die beiden Stützkörperhälften 3.2, 3.3 sind auf ihren Außenseiten wenigstens teilweise mit einer Membranfilterschicht 3.5 beschichtet.

Die Ebene 3.4 ist von fundamentaler Bedeutung für die Funktion der Filtrationsplatte. Es wird nämlich angestrebt, dass die beiden Stützkörperhälften 3.2, 3.3 in der Ebene 3.4 eine innige Verbindung miteinander eingehen, und dass in dieser Ebene keinerlei Risse, Spalten oder Lufteinschlüsse vorliegen.

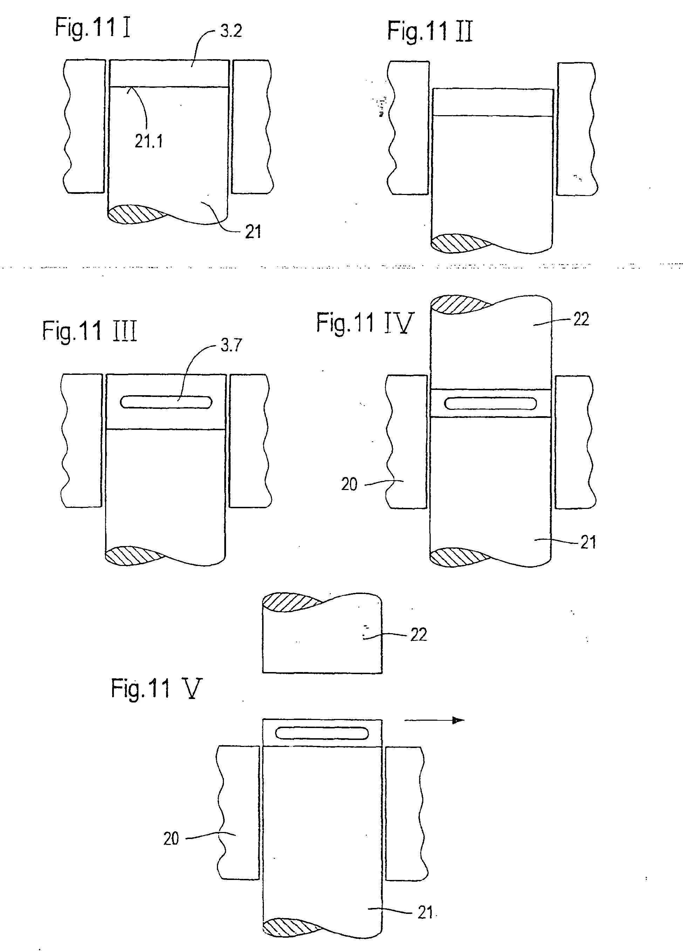

Figur 11 zeigt einen wesentlichen Teil einer Vorrichtung zum Durchführen des Verfahrens. Man erkennt einen Kolben 21 mit einer Stirnfläche 21.1. Man erkennt ferner eine Zylinderbüchse 20, in der der Kolben 21 geführt ist.

Zum Durchführen des Verfahrens wird in einer ersten Phase l sinterfähiges, pulverförmiges Material auf die Stirnfläche 21.1 des Kolbens 21 aufgebracht, so dass sich eine Schüttung 3.2 ergibt, die später eine der beiden Stützkörperhälften darstellt.

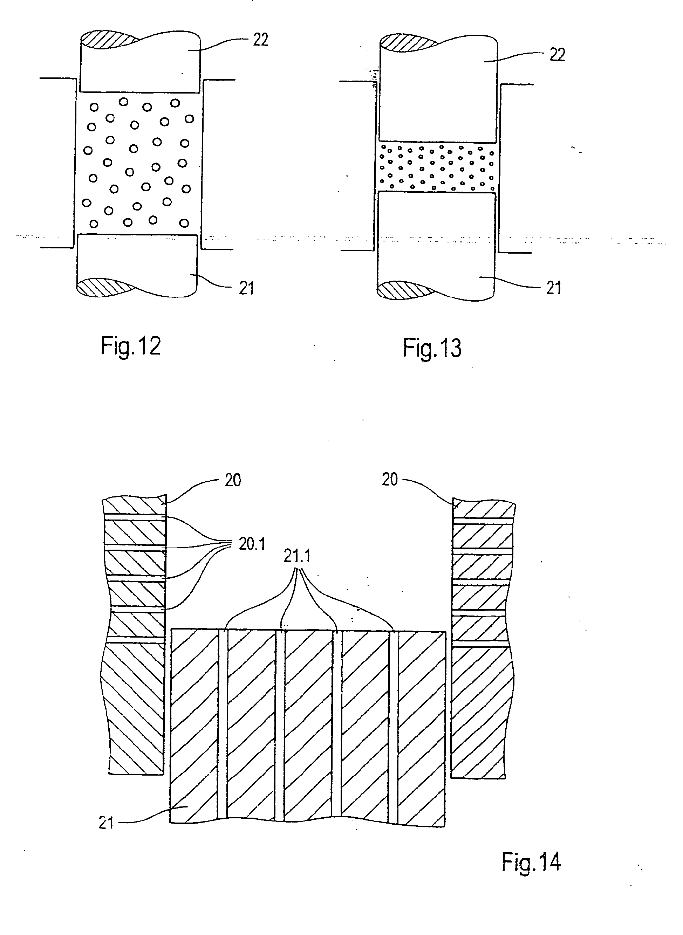

In Phase II ist der Kolben 21 um eine bestimmte Wegstrecke nach unten gefahren. Genau wie bei der Darstellung gemäß der Figuren 12 - 14 wird auch hier nach Aufbringen der ersten Schüttung 3.2 ein Zwischenkörper aufgebracht, bestehend aus einem Material, das sich unter bestimmten Bedingungen verflüchtigen kann, ferner eine zweite Schüttung, die die zweite Stützkörperhälfte darstellt. Dieser Zustand ist in Phase lll gezeigt. Man erkennt dort den immer noch abgefahrenen Kolben 21, der aber nun die erste Schüttung, den Zwischenkörper sowie die zweite Schüttung trägt. Die beiden Schüttungen gehen dabei ineinander über, so dass keinerlei Trennfuge besteht. Aus den beiden Schüttungen ist nunmehr ein einziges Formteil geworden, das den Zwischenkörper 3.7 umschließt.

Phase IV zeigt den Kolben 21, der sich nach wie vor in der Position von Phase III befindet, ferner das genannte Formteil mit Zwischenkörper. Man erkennt weiterhin einen zweiten Kolben 22, der von oben her auf das Formteil herabgesenkt ist. Das Formteil wird nunmehr zwischen den beiden Kolben 21, 22 verpresst, wobei mindestens einer der beiden Kolben relativ zum anderen verfahren wird. Wird Kolben 22 verfahren, so läuft er in derselben Zylinderhülse 20, wie Kolben 21, Wie man sieht, ist der zwischen den beiden Kolben 21, 22 befindliche Pressling gegenüber dem Zustand gemäß Phase III komprimiert, desgleichen der Zwischenkörper 3.7.

Gleichzeitig mit dem Aufbringen von Druck kann auch Wärme auf das Formteil aufgebracht werden. Der Zwischenkörper besteht aus einem unter Druck und/oder Wärme sich verflüchtigenden Material.

In Phase V sind die beiden Kolben 21, 22 nach oben hochgefahren. Kolben 22 ist dabei derart abgehoben, dass er das Formteil nicht mehr berührt. Das Formteil befindet sich jetzt mit seiner Unterkante auf der Höhe der Oberkante der Zylinderhülse 20. Es kann in Richtung des Pfeiles verschoben und damit von Kolben 21 abgenommen werden.

Auf die Phase V folgt ein Sinterprozess. Dabei wird das Formteil hohen Temperaturen unterworfen. Dabei entsteht der nunmehr feste Stützkörper. Der Zwischenkörper 3.7 besteht aus einem Material, das bei Einwirkung entsprechender Temperaturen und/oder Chemikalien entweder sich verflüchtigt oder aufgelöst wird, so dass entsprechende Freiräume im Stützkörper verbleiben, um bei dem fertigen plattenförmigen Filtrationskörper als Kanäle zu dienen.

Das Zwischenkörpermaterial kann aus komprimierbarem oder nicht - komprimierbarem Material bestehen.

In den Figuren 12 und 13 ist ebenfalls eine Vorrichtung dargestellt und der Verdichtungsvorgang veranschaulicht. Dabei arbeiten zwei Kolben 21, 22 gegeneinander. Die Arbeitsweise ist grundsätzlich die gleiche, wie in den Figuren 11 l ― 11 V gezeigt. Es ist somit auch hier ein Zwischenkörper vorhanden, der aber nicht dargestellt ist. Der Zwischenkörper besteht wiederum aus einem Material, das sich bei Einwirkung entsprechender Temperaturen oder Chemikalien verflüchtigt oder aufgelöst wird, so dass entsprechende Freiräume im fertigen, plattenförmigen Filtrationskörper verbleiben.

Figur 12 veranschaulicht die Vorrichtung im Ausgangsstadium. Dabei befindet sich im Formnest ein entsprechendes Pulver, das aus sinterfähigem, kornförmigem Material besteht.

Figur 13 zeigt den verdichteten Zustand des Pulvers.

Im Ausgangszustand gemäß Figur 12 beträgt der Luftanteil beispielsweise 75 Vol.-%. Die von Kolben 21 aufgebrachte Presskraft beträgt noch 0 kp/cm².
Demgemäss steht der Inhalt des Formnestes, das heißt Pulver und Luft, unter Atmosphärendruck. Bei der Verdichtung wird das zwischen den Pulverpartikeln eingeschlossene Luftvolumen auf ein fünftel verringert.

Im verdichteten Zustand gemäß Figur 13 beträgt der Luftanteil 37,5 Vol.-%. Die Presskraft, die von Kolben 21 ausgeübt wird, beträgt 1000 kp/cm². Die zwischen den Pulverpartikeln eingeschlossene Luft steht unter einen Druck von 5 atm.

Der Druck ergibt sich aus dem Anfangsdruck vor Beginn des Verdichtungsprozesses, und dem Verdichtungsfaktor.

Ist der Luftdruck im Pressling nach der Entlastung (Presskraft = 0) größer, als der äußere Luftdruck, so steht der Pressling unter einem Innendruck. Es können sich Risse bilden, die den Pressling zerstören oder zumindest funktionsuntüchtig machen.

Gemäß der Erfindung wird diese Zerstörung vermieden durch die erfindungsgemäßen Maßnahmen.

Diese Maßnahmen können in Folgendem bestehen:
Es wird Luft während des Verdichtungsvorganges abgeführt. Dies kann beispielsweise dadurch geschehen, dass einer der beiden Pressstempel, beispielsweise Pressstempel 21, mit Bohrungen 21.1 versehen wird.

Auch kann die Zylinderhülse 20 mit Bohrungen 20.1 versehen sein.

Schließlich können sowohl Kolben 21 oder Kolben 22 und zugleich die Zylinderhülse 20 mit Bohrungen versehen sein.

Alternativ zu Bohrungen kann das Material derjenigen Teile, die das Formnest bilden, somit der Zylinderhülse 20 und/oder der Kolben 21, 22, porös sein. Dabei muss es sich um sogenanntes offenporiges Material handeln, bei welchem die Poren in leitender Verbindung miteinander stehen, so dass die im Formnest befindliche Luft während des Verdichtungsvorganges abgeführt werden kann. Dabei kann es sich beispielsweise um Sintermetall handeln.

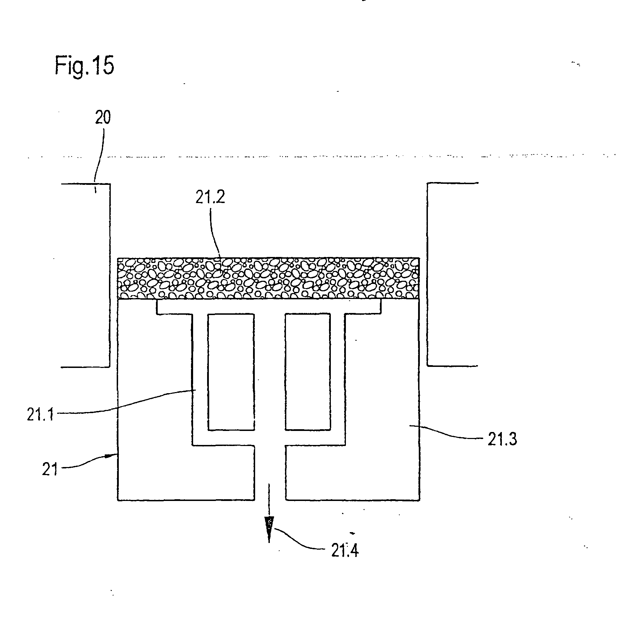

Eine interessante Variante ist in Figur 15 gezeigt. Dort besteht der Kolben 21 aus einer oberen, relativ dünnen Lage 21.2 sowie aus einem unteren Teil 21.3. Der untere Teil 21.3 weist ein verzweigtes Netz von Bohrungen 21.1 relativ großer lichter Weite auf. Die Lage 21.2 ist wiederum aus offenporigem Material gebildet.

Diese Ausführungsform hat den folgenden Vorteil:
Da die Lage 21.2 relativ dünn ist, ist der Weg der aus dem Formnest beim Verdichtungsprozess verdrängten Luft sehr klein, jedenfalls bis zum Erreichen der Bohrungen oder Kanäle 21.1. Der kleine Weg bedeutet aber einen geringen Strömungswiderstand, so dass relativ viel Luft in kurzer Zeit aus dem Formnest entweichen kann. Dieser Vorgang kann begünstigt werden durch Anschließen eines Vakuums - siehe Vakuumanschluss 21.4 - im unteren Bereich des Kolbens 21.

Eine weitere Möglichkeit des Vermeidens von Lufteinschlüssen besteht darin, den Verdichtungsvorgang entsprechend langsam ablaufen zu lassen. Je nach Art des Sitzes der Kolben 21, 22 in der Zylinderhülse 20 wird nämlich mehr oder minder viel Luft durch den Ringspalt zwischen Kolben und Zylinderhülse entweichen. Entgegen dem allgemeinen Bestreben, einen Produktionsprozess möglichst schnell ablaufen zu lassen, wird man somit den Verdichtungsprozess verzögert ablaufen lassen. Als Faustformel kann Folgendes gelten:
Die Verringerung des Volumens des Formnestes beim Verdichtungsprozess sollte wenigstens annähernd gleich sein mit dem Volumen der beim Verdichtungsprozess entweichenden Luft.

Auch kann es zweckmäßig sein, den Verdichtungsprozess intermittierend ablaufen zu lassen. Dies bedeutet, dass man während einer ersten Phase einen gewissen Pressdruck aufbringt, bis ein bestimmter Kompressionszustand A erreicht ist. Sodann wird eine kurze Pause eingelegt. Es folgt ein weiterer Verdichtungsvorgang bis zum Erreichen eines zweiten Kompressionszustandes B, und so weiter.

Eine weitere Möglichkeit des Vermeidens der Nachteile eingeschlossener Luft im Formnest besteht in Folgendem:
Wie bei der Beschreibung von Figur 11 erwähnt, werden zwei Pulverquanten in das Formnest eingebracht.

Das Vorverdichten eines ersten Quantums könnte stufenweise geschehen. Während einer ersten Verdichtungsstufe wird der größte Teil des ersten Quantums stark vorverdichtet, und sodann wird ein zweiter, kleiner Teil des ersten Quantums auf den ersten, stark verdichteten Teil aufgebracht, und nochmals unter mäßigem Druck verdichtet. Diese Vorgehensweise hat den Vorteil, dass der zweite, mäßig vorverdichtete Teil des ersten Quantums eine innige Bindung mit dem zweiten Quantum eingehen kann, da die Körner des zweiten, weniger verdichteten Teiles noch eine größere Bewegungsfreiheit haben.

Eine weitere Möglichkeit der Lösung der gestellten Aufgabe besteht darin, auf das Formnest oder ganz allgemein in den Bereich zwischen den beiden Kolben 21, 22 einen Unterdruck aufzubringen. Ein solches Evakuieren kann bereits vor dem verdichten eingeleitet werden. Es kann auch während des Verdichtens stattfinden. Es kann auch vor dem verdichten und während des Verdichtens stattfinden.

Dabei können das Evakuieren einerseits und das Verdichten andererseits aufeinander abgestimmt werden, so dass im Formnest während des gesamten Prozesses ein gewünschter Druck herrscht. Die beiden genannten Vorgänge können beispielsweise derart ablaufen, dass in sie sich gegenseitig aufheben, so dass im Formnest zu jeden Zeitpunkt während des Verdichtens Atmosphärendruck herrscht. Statt dessen könnte auch ein gewisser Überdruck zugelassen werden, oder sogar ein gewisser Unterdruck.

## Patentansprüche

1. Verfahren zum Herstellen eines plattenförmigen Filtrationskörpers (4) aus einem sinterfähigen Pulver, wobei der Filtrationskörper (4) einen Stützkörper (3) umfasst, der aus porösem Material besteht, und in den Permeat-Ableitkanäle (3.1) eingebettet sind; wenigstens eine filtrierende Schicht (3.5), die auf den Außenseiten des Stützkörpers (3) aufgebracht ist, mit den folgenden Verfahrensschrltten:
1.1 es wird ein erstes Quantum sinterfähigen Pulvers in ein Formnest eingebracht, dessen Innenkontur annähernd der Außenkontur des Stützkörpers (3) entspricht;
1.2 es wird auf das erste Quantum ein Zwischenkörper (3.7) aufgebracht, der aus einem unter Druck und/oder Wärme sich verflüchtigenden Material besteht;
1.3 es wird ein zweites Quantum sinterfähigen Pulvers auf den Zwischenkörper (3.7) aufgeschüttet;
1.4 die beiden Quanten mit dem dazwischen befindlichen Zwischenkörper (3.7) werden durch Verdichten zu einem Zwischenprodukt geformt;
1.5 das Zwischenprodukt wird gesintert, gegebenenfalls durch mechanische Bearbeitung in die endgültige Form gebracht und mit einer filtrierenden Schicht überzogen; **gekennzeichnet durch** die folgenden Merkmale:
1.6 vor dem Verdichten und/oder während des Verdichtens wird an das Formnest ein Unterdruck angelegt, oder es wird das Verdichten intermittierend durchgeführt.

2. Verfahren nach Anspruch 1, **dadurch gekennzeichnet, dass** die Geschwindigkeit des Pressens oder die Haltedauer des gepressten Zustandes derart bemessen wird, dass die zwischen den Pulverpartikeln eingeschlossene Luft in einem solchen Maße entweicht, dass der Druck in der darin verbleibenden Luft annähernd auf Umgebungsdruck absinkt.

3. Verfahren nach Anspruch 1 oder 2, **dadurch gekennzeichnet, dass** wenigstens eines der Quanten außerhalb des Formnestes vorverdichtet oder völlig verdichtet wird.

4. Vorrichtung zum Herstellen eines plattenförmigen Filtrationskörpers (4), wobei der Filtrationskörper (4) einen Stützkörper (3) umfasst, der aus porösem Material besteht und in den Permeat-Ableitkanäle (3.1) eingebettet sind;
4.1 mit einem Formnest, dessen Innenkontur der Außenkontur des Stützkörpers (3) entspricht;
4.2 mit einer Presseinrichtung zum Verdichten eines in das Formnest einzubringenden Pulvers; **gekennzeichnet durch** die folgenden Merkmale:
4.3 mit Kanälen (20.1, 21.1) zum Ableiten von im Formnest enthaltener Luft;
4.4 mit einer Einrichtung zum Anlegen eines Unterdruckes an die Kanäle (20.1, 21.1).

5. Vorrichtung nach Anspruch 4, **dadurch gekennzeichnet, dass** wenigstens Bereiche der das Formnest bildenden Bauteile (20, 21, 22) aus porösem Material bestehen.

6. Vorrichtung nach Anspruch 5, **dadurch gekennzeichnet, dass** den Kanälen (20.1, 21.1) oder den Poren des porösen Materials eine Unterdruckeinrichtung zum Extrahieren von im Formnest befindlicher Luft zugeordnet ist.

## Claims

1. A method for manufacturing a plate-shaped filtration body (4) from a sinterable powder, whereas the filtration body (4) includes a supporting body (3), which consists of a porous material, and into which permeate discharge channels (3.1) are embedded; at least one filtering layer (3.5), which is mounted on the outsides of the supporting body (3), with the following method steps:
1.1 a first amount of sinterable powder is inserted into a mould cavity, whose internal contour approximately matches the external contour of the supporting body (3);
1.2 an intermediate body (3.7) is mounted on the first amount of which consists of a material which volatilises when subjected to pressure and/or heat;
1.3 a second amount of sinterable powder is poured onto the intermediate body (3.7);
1.4 both amounts with the intermediate body (3.7) situated therebetween are formed into an intermediate product by compression;
1.5 the intermediate product is sintered, possibly brought into its final form by mechanical treatment and coated with a filtering layer; **characterised by** the following features:
1.6 vacuum is applied to the mould cavity before compression and/or during compression or the compression is performed intermittently.

2. The method of claim 1, **characterised in that** the speed of the pressing process or the soaking time of the pressed condition is adjusted so that the air imprisoned between the powder particles leaks until the pressure in air remaining therein approximately drops to the ambient pressure.

3. A method according to claim 1 or 2, **characterised in that** at least one of the amounts is precompressed or completely compressed outside the mould cavity.

4. A device for the production of a plate-shaped filtration body (4),
whereas the filtration body (4) includes a supporting body (3), which consists of a porous material and into which permeate discharge channels (3.1) are embedded;
4.1 with a mould cavity, whose internal contour approximately matches the external contour of the supporting body (3);
4.2 with a pressing device for compression of a powder to be injected into the mould cavity; **characterised by** the following features:
4.3 with channels (20.1, 21.1) for discharging the air contained in the mould cavity;
4.4 with a device for application of a vacuum to the channels (20.1, 21.1).

5. The device according to claim 4, **characterised in that** at least areas of the components (20, 21, 22) forming the mould cavity consist of a porous material.

6. The device according to claim 5, **characterised in that** a vacuum device is associated with the channels (20.1, 21.1) or the pores of the porous material for extraction of the air contained in the mould cavity.

## Revendications

1. Procédé de fabrication d'un élément filtrant (4) en forme de plaque à partir d'une poudre frittable, où l'élément filtrant (4) comprend un corps d'appui (3), qui se compose de matériau poreux, et dans lequel des canaux d'évacuation de perméat (3.1) sont encastrés; au moins une couche filtrante (3.5), qui est disposée sur les côtés externes du corps d'appui (3), comprenant les phases de procédé suivantes :
1.1 on verse une première quantité de poudre frittable dans une cavité du moule, dont le contour interne correspond sensiblement au contour externe du corps d'appui (3);
1.2 on dispose un corps intermédiaire (3.7) sur la première quantité, corps composé d'un matériau volatile lorsqu'il est soumis à la pression et/ou la chaleur;
1.3 on verse une seconde quantité de poudre frittable sur le corps intermédiaire (3.7);
1.4 les deux quantités, avec le corps intermédiaire (3.7) situé entre les deux quantités, sont conformées pour obtenir un produit intermédiaire par compression;
1.5 on fritte le produit intermédiaire, le cas échéant selon un traitement mécanique pour lui donner sa forme définitive avant de le recouvrir d'une couche filtrante; présentant les caractéristiques suivantes:
1.6 on fait le vide dans la cavité du moule avant la compression et/ou pendant la compression ou bien la compression est réalisée par intermittence.

2. Procédé selon la revendication 1, **caractérisé en ce que** l'on règle la vitesse du pressage ou bien la durée de palier de l'état comprimé pour que l'air emprisonné entre les particules de poudre s'échappe jusqu'à ce que la pression dans l'air resté à l'intérieur retombe sensiblement à la pression ambiante.

3. Procédé selon la revendication 1 ou 2, **caractérisé en ce qu'**au moins l'une des quantités est précomprimée ou entièrement comprimée à l'extérieur de la cavité du moule.

4. Dispositif de fabrication d'un élément filtrant (4) en forme de plaque,
où l'élément filtrant (4) comprend un corps d'appui (3), qui se compose de matériau poreux, et dans lequel des canaux d'évacuation de perméat (3.1) sont encastrés;
4.1 comprenant une cavité du moule, dont le contour interne correspond au contour externe du corps d'appui (3);
4.2 comprenant un dispositif de pressage pour comprimer une poudre à injecter dans la cavité du moule; présentant les caractéristiques suivantes:
4.3 des canaux (20.1, 21.1) pour évacuer l'air contenu dans la cavité du moule;
4.4 un système permettant d'appliquer une pression négative aux canaux (20.1, 21.1).

5. Dispositif selon la revendication 4, **caractérisé en ce qu'**au moins plusieurs zones des composants (20, 21, 22) constituant la cavité du moule sont en matériau poreux.

6. Dispositif selon la revendication 5, **caractérisé en ce que** les canaux (20.1, 21.1) ou les pores du matériau poreux disposent d'un système de dépression pour extraire l'air contenu dans la cavité du moule.
